# FASCICULE DE BREVET EUROPEEN

(11) **EP 3 322 004 B1**
(45) Date de publication et mention de la délivrance du brevet: **04.12.2019**
(21) Numéro de dépôt: 17200965.6
(22) Date de dépôt: 10.11.2017
(51) Int. Cl.: H01M 4/04, H01M 4/13, H01M 10/0525, H01M 4/62, H01M 4/02

(54) **PROCÉDÉ DE FABRICATION D'UNE ÉLECTRODE POUR ACCUMULATEUR**
HERSTELLUNGSVERFAHREN EINER ELEKTRODE FÜR EINEN AKKUMULATOR
METHOD FOR MANUFACTURING AN ELECTRODE FOR A BATTERY

(30) Priorité: 15.11.2016 FR 1661025
(43) Date de publication de la demande: 16.05.2018
(73) Titulaire: Commissariat à l'énergie atomique et aux énergies alternatives, 75015 Paris (FR)
(72) Inventeur: SOLAN, Sébastien, 38170 SEYSSINET-PARISET (FR); GUERIN, Camille, 38000 GRENOBLE (FR)
(74) Mandataire: Brevalex

(56) Documents cités:
- EP-A1- 2 618 409
- WO-A1-97/44847
- FR-A1- 2 841 045

## Description

### DOMAINE TECHNIQUE

La présente invention concerne un procédé de fabrication d'une électrode pour accumulateur. Plus particulièrement, la présente invention concerne un procédé de fabrication d'une électrode, sous forme gélifiée, pour accumulateur, flexible, voire déformable.

### ART ANTÉRIEUR

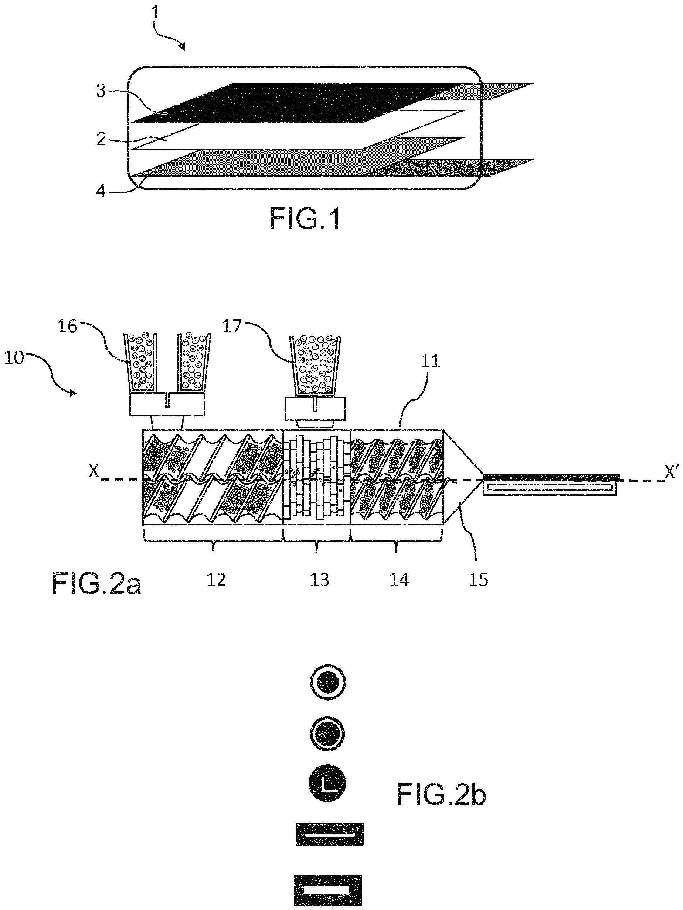

Une batterie lithium ion, illustrée à la figure 1 et connue de l'état de la technique, comprend en général :
- un ou plusieurs cœurs électrochimiques 1, chaque cœur électrochimique comprenant un constituant électrolytique 2 intercalé entre une électrode négative 3 et une électrode positive 4, ladite électrode positive comprenant un matériau d'insertion, par exemple le cation lithium,
- deux collecteurs de courant 5 et 6, respectivement, de l'électrode positive et de l'électrode négative,
- un emballage, solide ou souple, dans lequel est disposé le cœur électrochimique, et fermé hermétiquement de manière à assurer l'étanchéité du dispositif.

Des pattes de reprise de courant, connectées aux deux collecteurs, sortent de l'emballage.

L'électrode positive comprend généralement un matériau d'insertion du cation lithium. Ce matériau d'insertion peut par exemple comprendre des matériaux composites du type, par exemple, LiFePO₄ (phosphate de fer lithié), ou oxyde de métaux de transition (matériaux lamellaires : LiCoO₂ : oxyde de cobalt lithié, LiN_{0.33}Mn_{0.33}Co_{0.33}O₂ etc...).

Le constituant électrolytique comprend un séparateur séparant physiquement les électrodes positive et négative. Le séparateur peut comprendre un matériau polymère ou un composite microporeux, et est généralement imbibé d'une solution électrolytique organique destinée à assurer le transport des ions lithium d'une électrode à l'autre. Plus particulièrement, il s'agit d'un transport des ions lithium de l'électrode positive vers l'électrode négative lors d'un cycle de charge et inversement lors d'un cycle de décharge.

La solution électrolytique organique, généralement exempte de traces d'eau et/ou d'oxygène, peut comprendre un mélange de solvants organiques (par exemple des carbonates) auquel est ajouté un sel de lithium, par exemple du LiPF₆.

L'électrode négative peut être en carbone graphite, en silicium, ou, dès lors que des applications de puissance sont envisagées, en Li₄Ti₅O₁₂ (matériau titanate).

Le collecteur de courant de l'électrode positive est généralement en aluminium. Par ailleurs, l'électrode positive peut être formée par une technique de dépôt du matériau d'insertion sur le collecteur de courant. La technique de dépôt peut être une technique d'induction, de sérigraphie, de jet d'encre ou encore de pulvérisation en voie liquide.

Le collecteur de courant de l'électrode négative peut être en cuivre ou en aluminium, selon que l'électrode négative est, respectivement, en carbone graphite ou en matériau titanate.

Ainsi, l'assemblage de la batterie lithium ion, connu de l'état de la technique, comprend en général une première étape de mise en place du ou des cœurs électrolytiques, dépourvu de la solution électrolytique, dans l'emballage.

L'assemblage de la batterie lithium ion comprend en outre une seconde étape d'introduction de la solution électrolytique destinée à mouiller le ou les cœurs électrolytiques, et plus particulièrement, à imbiber le séparateur du ou des cœurs électrolytiques.

Enfin, l'emballage est scellé, par exemple thermo scellé, de manière à rendre l'assemblage étanche.

Il est entendu que les pattes de reprise de courant ont été positionnées avant le scellement de l'emballage.

Toutefois, ce procédé de fabrication d'une batterie lithium ion n'est pas satisfaisant.

En effet, le procédé d'assemblage connu de l'état de la technique nécessite l'utilisation d'une solution électrolytique liquide, qui est introduite dans l'emballage et de manière à correctement imprégner le séparateur.

Aussi, dans un souci de simplification du procédé, il est souhaitable de pouvoir supprimer cette étape.

Par ailleurs, les batteries lithium ions assemblées par le procédé d'assemblage connu de l'état de la technique offrent une flexibilité réduite, limitant d'autant la mise en forme desdites batteries (par enroulement par exemple).

En outre, le procédé d'assemblage connu de l'état de la technique est limité à la mise en œuvre d'électrodes planes. Or pour certaines applications, notamment des applications textiles, d'autres formes d'électrodes peuvent être requises.

Ainsi, un but de la présente invention est de proposer un procédé de fabrication d'une électrode pour accumulateur permettant de simplifier le procédé d'assemblage dudit accumulateur. WO 97/44847 A1 divulgue un procédé de fabrication d'une électrode, sous forme gélifiée, d'une batterie métal alcalin-ion, le procédé comprend une étape d'extrusion d'un mélange comprenant: un matériau actif d'électrode et un polymère support.

Un autre but de la présente invention est également de proposer un procédé de fabrication d'une électrode flexible, voire déformable.

Un autre but de la présente invention est de proposer un procédé de fabrication d'une électrode permettant de conférer à ladite électrode d'autres formes d'une surface plane.

### EXPOSÉ DE L'INVENTION

Les buts de la présente invention sont au moins en partie atteints par un procédé de fabrication d'une électrode, sous forme gélifiée, d'une batterie métal alcalin-ion, le procédé comprend une étape d'extrusion d'un mélange comprenant :
- un matériau actif d'électrode
- un composé dinitrile de formule N≡C - R - C ≡ N, où R est un groupement hydrocarboné CₙH₂ₙ, et n étant égal à 1 ou 2, de préférence n est égal à 2,
- un polymère support, présentant une température de transition vitreuse Tg, thermo fusible, soluble dans le composé dinitrile.

L'électrode ainsi fabriquée présente la tenue mécanique et la conductivité ionique requises pour être mise en œuvre dans une batterie métal alcalin ion.

Le procédé d'extrusion ouvre également la voie à la fabrication d'électrodes de différentes formes, par exemple des fils, des tubes creux, notamment pour des applications dans les domaines textiles et médicaux.

La mise en œuvre du procédé de gélification du polymère support par le composé dinitrile confère à l'électrode une tenue mécanique suffisante pour être utilisée dans une batterie métal alcalin ion, et une flexibilité accrue par rapport aux électrodes solides connues de l'état de la technique.

En outre, le procédé selon l'invention est un procédé plus simple à mettre œuvre que ceux connus de l'état de la technique.

Selon un mode de mise en œuvre, l'étape d'extrusion est exécutée au moyen d'une extrudeuse comprenant au moins une zone de chauffe, au moins une zone de mélangeage, et une zone de pompage terminée par une filière.

Selon un mode de mise en œuvre, le polymère support est introduit dans l'extrudeuse au niveau de la zone de chauffe, où il est chauffé à une température T supérieure à la température de transition vitreuse Tg, avantageusement à une température T comprise entre Tg et Tg + 50°C.

Selon un mode de mise en œuvre, le matériau actif d'électrode est un matériau actif d'électrode positive, avantageusement, le matériau actif d'électrode positive comprend au moins un des éléments choisi parmi :
LiFePO₄, Li₂FeSiO₄, LiFeSO₄, LiMn₂O₄, LiNiₓMn_{y}Co_{1-2y}O₂ (avec x compris entre 0 et 1, et y compris entre 0 et 0,5), LiNiO₂, LiMnO₃, LiMnO₂, L11iMn₂O₃, Li₄Mn₅O₁₂, LiMn₂₋ₓMₓO₂ (avec M comprenant au moins un des éléments choisi parmi : Co, Ni, Fe, Cr, Zn, Ti, et x étant compris entre 0,01 et 0,2), Li₂Mn₃MO₈ (avec M comprenant au moins un des éléments choisi parmi: Fe, Co, Ni, Cu, Zn), Li₁₋ₓAₓMn₂O₄ (avec A comprenant au moins un des éléments choisi parmi: Mg, B, Al, Fe, Co, Ni, Cr, Zn, Ca ; et x étant compris entre 0,01 et 0,1), LiNi₁₋ₓMₓO₂ (avec M comprenant au moins un des éléments choisi parmi: Co, Fe, Ga; et x étant compris entre 0,01 et 0,2), LiFeO₂, Fe₂(SO₄)₃, LiCo₁₋ₓMₓO₂ (avec M comprenant au moins un des éléments choisi parmi: Ni, Fe, Mn ; et x étant compris entre 0,01 et 0,2), LiNi₁₋ₓMₓO₂ (avec M comprenant au moins un des éléments choisi parmi: Mn, Fe, Co, Al, Ga, Ca, Mg; et x étant compris entre 0,01 et 0,2), Fe(Mo0₄)₃, FeF₃, LiMPO₄, LiMVO₄, Li₂MSiO₄ (avec M comprenant au moins un des éléments choisi parmi: Co, Ni, Mn, Fe), KMn₂O₂, KₓMO₂ (avec M comprenant au moins un des éléments choisi parmi : Co, Ni, Fe, Cr, et avec x compris entre 0 et 1), KₓFeMnO₂ (avec x compris entre 0 et 1), KₓMnO₂ (avec x compris entre 0 et 1), KₓCr_{0,6}Ti_{0,4}O₂, KₓTi_{0,5}Co_{0,5}O₂ (avec x compris entre 0 et 1), KₓCo_{1/3}Ni_{1/3}Mn_{1/3}O₂ (avec x compris entre 0 et 1), Kₓ(Ni_{0,8}Co_{0,15}Al_{0,05})O₂ (avec x compris entre 0 et 1), KₓFePO₄ (avec x compris entre 0 et 1), K₂FePO₄F, KₓV₂O₅ (avec x compris entre 0 et 2), KₓVPO₄F (avec x compris entre 0 et 1), KₓMnPO₄ (avec x compris entre 0 et 1), FePO₄, K₃V₂(PO₄)₃, K₃V₂(PO₄)₂F₃, V₂O₅, K_{1,5}VOPO₄F_{0,5}, K₂Fe₂(SO₄)₃, KNi_{0,5}Mn_{0,5}O₂, K_{2/3}Ni_{1/3}Mn_{2/3}O₂, K_{0,45}Ni_{0,22}Co_{0,11}Mn_{0,66}O₂, K_{0,44}MnO₂, K₄Fe₃(PO₄)₂P₂0₇, KₓMFe(CN)₆ (avec M comprenant au moins un des éléments choisi parmi: Fe, Cu, Ni ; et x compris entre 0 et 1).

Selon un mode de mise en œuvre, le matériau actif d'électrode est un matériau actif d'électrode négative, avantageusement, le matériau actif d'électrode négative comprend au moins un des matériaux choisi parmi :
Li₄Ti₅O₁₂, TiO₂, LiₓC₆ (avec x compris entre 0 et 1), carbone graphite, carbone noir, Na₃V₂(PO₄)₂F₃, Na_{0,85}Li_{0,52}Ni_{0,21}Mn_{0,64}0₂, Na₃V₂(PO₄)₄, Na₃(Mn_{0,5}Fe_{0,5})PO₄, Na₂FePO₄F, NaFePO₄, NaTi₂(PO₄)₃, Na₂Ti₃O₇, SiB₄, SiB₆, Mg₂Si, Ni₂Si, TiSi₂, MoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≤2), SiC, SiOC, LiSiO, SiOₓ (avec x compris entre 0 et 2), Fe₂0₃, SnO, un alliage LiM (M comprenant au moins un des éléments choisi parmi: Ag, Al, Ba, Bi, Cu, Ga, Ge, In, Ni, P, Pb, Sb, Si, Sn, Sr, Zn, Ti), un matériau comprenant un atome d'étain inclus dans un alliage comprenant au moins un des éléments choisi parmi : Si, Ni, Cu, Fe, Co, Mn, Zn, Ag, Ti, Ge, Bi, Sb, Cr, O, C.

Selon un mode de mise en œuvre, le polymère support comprend au moins un des éléments choisi parmi : copolyfluorure de vinylidène hexafluoropropylène, poly(méthyl méthacrylate), poly(butyl méthacrylate), oxyde de polyéthylène, polyvinylpyrrolidone.

Selon un mode de mise en œuvre, le rapport massique entre le composé dinitrile et le polymère support est compris entre 40/60 et 90/10.

Selon un mode de mise en œuvre, le mélange destiné à être extrudé comprend en outre un sel de métal alcalin solubilisé à chaud dans le composé dinitrile pour former un électrolyte.

Par solubilisé à chaud, on entend solubilisé à une température supérieure à la température de fusion du composé dinitrile.

Le procédé selon l'invention ne met en œuvre qu'un seul solvant, le composé dinitrile, pour solubiliser le sel de métal alcalin, et conférer une forme gélifiée.

Autrement dit, il n'est nullement nécessaire d'employer un solvant spécifique pour le polymère support. Par conséquent, aucune étape d'évaporation de solvant n'est requise pour la mise en œuvre du procédé.

Selon un mode de mise en œuvre, le sel de métal alcalin et le composé dinitrile sont introduits dans l'extrudeuse soit au niveau de la zone de chauffe, soit au niveau de la zone de mélangeage.

Selon un mode de mise en œuvre, le sel de métal alcalin est un sel lithium, avantageusement, le sel de métal lithium comprend au moins un des éléments choisi parmi : lithium bis-trifluorométhanesulfonimide, lithium bis(oxatlato)borate, LiPF₆, LiClO₄, LiBF₄, LiAsF₆, LiCF₃SO₃, LiN(CF₃SO₂)₃, LiN(C₂F₆SO₂).

Selon un mode de mise en œuvre, le sel de métal alcalin présente une concentration comprise entre 0,5 mol/L et 5 mol/L dans le composé dinitrile.

Selon un mode de mise en œuvre, le mélange comprend en outre un matériau conducteur électronique, avantageusement, le matériau conducteur électronique comprend au moins un des éléments choisi parmi : noir de carbone, fibres de carbone.

Selon un mode de mise en œuvre, l'électrode gélifiée est disposée sur un collecteur de courant après l'étape d'extrusion.

### BRÈVE DESCRIPTION DES DESSINS

D'autres caractéristiques et avantages apparaîtront dans la description qui va suivre du procédé de fabrication d'une électrode, sous forme gélifiée, d'une batterie métal alcalin-ion selon l'invention, donnés à titre d'exemples non limitatifs, en référence aux dessins annexés dans lesquels :
- la figure 1 est une représentation schématique d'une batterie lithium ions, plus particulièrement, la figure 1 représente l'empilement des éléments constitutifs du cœur électrolytique de ladite batterie,
- la figure 2a est une représentation schématique, selon un plan de coupe, d'une extrudeuse, le plan de coupe comprenant l'axe longitudinal XX',
- la figure 2b est une représentation schématique de différentes formes de filières possibles pour la mise en œuvre du procédé selon l'invention,
- la figure 3a est une représentation en coupe d'une extrudeuse pour la mise en œuvre du procédé selon l'invention, l'extrudeuse comprend 7 zones notées, successivement A, B, C, D, E, F et G selon son axe d'élongation, la zones A et G représentent, respectivement, la zone d'alimentation et la sortie de l'extrudeuse,
- la figure 3b est une représentation graphique du profil de température en « °C » (selon l'axe vertical) en fonction de la position selon l'axe d'élongation de l'extrudeuse représentée à la figure 3a, plus particulièrement, la figure 3b représente la température régnant dans chacune de zones (A, B, C, D, E, F et G) de ladite extrudeuse pendant l'étape d'extrusion pour l'extrusion de l'électrode gélifiée (Eg) et du polymère support (Es),
- la figure 4 est une représentation graphique de la capacité en mAh/g (axe vertical) d'une électrode positive gélifiée obtenue selon l'invention, en fonction de cycles de charge et de décharge.

### EXPOSÉ DÉTAILLÉ DE MODES DE RÉALISATION PARTICULIERS

Pour les différents modes de mise en œuvre, les mêmes références seront utilisées pour des éléments identiques ou assurant la même fonction, par souci de simplification de la description.

L'invention décrite de manière détaillée ci-dessous met en œuvre un procédé de formation d'une électrode, sous forme gélifiée, d'une batterie métal alcalin-ion, par voie fondue. Plus particulièrement, le procédé par voie fondue selon l'invention implique une étape d'extrusion. Le procédé selon l'invention, qui permet de réaliser des électrodes flexibles sous forme gélifiée, ne met en œuvre qu'un seul solvant, le composé dinitrile, qui joue également le rôle de gélifiant d'un polymère support entrant dans la composition de ladite électrode.

A la figure 2, on peut voir un exemple de mise en œuvre de la présente invention.

Le procédé selon l'invention est exécuté par extrusion d'un mélange. Un procédé d'extrusion permet de compresser le mélange, et de le contraindre à traverser une filière. La filière permet d'imposer une forme donnée au profil du mélange extrudé.

Par profil du mélange extrudé nous entendant l'intersection avec un plan perpendiculaire avec la direction d'extrusion dudit mélange.

L'extrusion est exécutée au moyen d'une extrudeuse 10, et permet de réaliser un mélange intime des différents éléments formant le mélange.

Plus particulièrement, l'extrusion permet de réaliser des électrodes plus épaisses que celles connues de l'état de la technique, par exemple d'une épaisseur comprise entre 10 µm et 2500 µm.

L'extrudeuse 10 comprend un fourreau 11, s'étendant selon un axe longitudinal XX', à l'intérieur duquel est positionnée une ou plusieurs vis sans fin, par exemple deux vis. L'extrudeuse 10 peut comprendre des zones de chauffe 12, des zones de mélangeage 13, et des zones de pompage 14, l'extrudeuse étant terminée par une filière 15 (il est entendu que les zones de chauffe 12, les zones de mélangeage 13, et les zones de pompage 14 sont dans le fourreau).

Une zone de chauffe 12 est destinée à faire fondre, par élévation de température, au moins un des éléments formant le mélange. L'extrudeuse est également pourvue de premiers moyens d'alimentation 16, par exemple un doseur gravimétrique, permettant l'introduction d'éléments formant le mélange au niveau de la zone de chauffe 12. L'élévation de température est assurée par des moyens de chauffage, dont la mise en œuvre est connue par l'homme du métier, et ne sont, par conséquent, pas décrits dans la présente demande.

La zone de mélangeage 13 assure un mélange intime des éléments formant le mélange, et peut être contigüe à une zone de chauffe 12. Le mélangeage est alors assuré par des moyens de mélangeage 13 disposés sur la ou les vis sans fin. Plus particulièrement, les moyens de mélangeage 13 constituent une rupture du filetage des vis sans fin, et peuvent comprendre des pales. Les moyens de mélangeage sont connus de l'homme du métier et ne sont donc pas décrits dans la présente demande. La zone de mélangeage est également destinée à induire un fort taux de cisaillement, et ainsi, comme nous le verrons dans la suite de la description, orienter les chaines d'un polymère support. Une zone de mélangeage 13 peut également comprendre des seconds moyens d'alimentation 16.

La zone de pompage 14 pousse le mélange, par pression, vers la filière 15, et peut être contigüe à une zone de mélangeage 13. La ou les vis sans fin comprennent dans la zone de pompage 14 un filetage permettant d'exercer la pression nécessaire pour pousser le mélange vers la filière 15.

La filière 15 peut conférer n'importe quelle forme au profil du mélange extrudé. Plus particulièrement, le mélange peut être extrudé en forme de feuille, de tube creux ou encore présenter un profil en coin.

L'extrusion peut être exécutée en introduisant tout ou partie des éléments formant le mélange dans l'extrudeuse au niveau des premiers moyens d'alimentation 16. Les éléments sont alors chauffés dans une zone de chauffe 12, et sont également poussés de la zone de chauffe 12 vers une zone de mélangeage 13 par le filetage de la ou des vis sans fin. Les éléments non introduits au niveau des premiers moyens d'alimentation 16 le sont au niveau des seconds moyens d'alimentation 17.

Les éléments formant le mélange comprennent :
- un matériau actif d'électrode,
- un composé dinitrile de formule N≡C - R - C ≡ N, où R est un groupement hydrocarboné CₙH₂ₙ, et n étant égal à 1 ou 2, de préférence n est égal à 2,
- un polymère support, présentant une température de transition vitreuse Tg, thermo fusible, soluble dans le composé dinitrile.

Par matériau actif d'électrode, on entend la matière active de l'électrode. Plus particulièrement, la matière active de l'électrode positive (cathode) ou négative (anode) comprend un matériau d'insertion d'ion de métal alcalin. Selon la présente invention, l'ion de métal alcalin comprend au moins un des cations choisi parmi : ion lithium, ion sodium, ion potassium.

La matière active joue donc un rôle d'insertion et de désinsertion des ions métal alcalin lors de processus de charge et de décharge d'une batterie métal alcalin ion. Autrement dit la matière active participe directement au processus électrochimique lors de la charge et de la décharge de la batterie.

Afin de permettre les cycles de charge et de décharge d'une batterie métal alcalin ion, l'insertion et la désinsertion des ions métal alcalin de la matière active doit être réversible, et ne doit induire que peu ou pas de changement structuraux de la matière active.

Par ailleurs, en fonction des applications envisagées pour la batterie, la matière active disposée au niveau de chacune des électrodes doit répondre à des critères de :
- stabilité thermique et chimique,
- conductivité électronique,
- compatibilité chimique avec l'électrolyte de la batterie,
- capacité d'insertion d'ions métal alcalin afin de conférer à la batterie une capacité donnée,
- cinétique d'insertion et de désinsertion des ions métal alcalin afin de garantir un niveau de puissance donnée de la batterie.

Avantageusement, le matériau actif d'électrode est un matériau actif d'électrode positive. Encore plus avantageusement, le matériau actif d'électrode positive comprend au moins un des éléments choisi parmi :
LiFePO₄ (LFP), Li₂FeSiO₄, LiFeSO₄, LiMn₂O₄, LiNiₓMn_{y}Co_{1-2y}O₂ (avec x compris entre 0 et 1, et y compris entre 0 et 0,5), LiNiO₂, LiMnO₃, LiMnO₂, LiMn₂O₃, Li₄Mn₅O₁₂, LiMn₂₋ₓMₓO₂ (avec comprenant au moins un des éléments choisi parmi : Co, Ni, Fe, Cr, Zn, Ti, et x étant compris entre 0,01 et 0,2), Li₂Mn₃MO₈ (avec M comprenant au moins un des éléments choisi parmi: Fe, Co, Ni, Cu, Zn), Li₁₋ₓAₓMn₂O₄ (avec A comprenant au moins un des éléments choisi parmi: Mg, B, Al, Fe, Co, Ni, Cr, Zn, Ca ; et x étant compris entre 0,01 et 0,1), LiNi₁₋ₓMₓO₂ (avec M comprenant au moins un des éléments choisi parmi: Co, Fe, Ga; et x étant compris entre 0,01 et 0,2), LiFeO₂, Fe₂(SO₄)₃, LiCo₁₋ₓMₓO₂ (avec M comprenant au moins un des éléments choisi parmi: Ni, Fe, Mn; et x étant compris entre 0,01 et 0,2), LiNi₁₋ₓM_{X}O₂ (avec M comprenant au moins un des éléments choisi parmi: Mn, Fe, Co, Al, Ga, Ca, Mg ; et x étant compris entre 0,01 et 0,2), Fe(MoO₄)₃, FeF₃, LiMPO₄, LiMVO₄, Li₂MSiO₄ (avec M comprenant au moins un des éléments choisi parmi: Co, Ni, Mn, Fe), KMn₂O₂, KₓMO₂ (avec M comprenant au moins un des éléments choisi parmi : Co, Ni, Fe, Cr, et avec x compris entre 0 et 1), KₓFeMnO₂ (avec x compris entre 0 et 1), KₓMnO₂ (avec x compris entre 0 et 1), KₓCr_{0,6}Ti_{0,4}O₂, KₓTi_{0,5}Co_{0,5}O₂ (avec x compris entre 0 et 1), KₓCo_{1/3}Ni_{1/3}Mn_{1/3}O₂ (avec x compris entre 0 et 1), Kₓ(Ni_{0,8}Co_{0,15}Al_{0,05})O₂ (avec x compris entre 0 et 1), KₓFePO₄ (avec x compris entre 0 et 1), K₂FePO₄F, KₓV₂O₅ (avec x compris entre 0 et 2), KₓVPO₄F (avec x compris entre 0 et 1), KₓMnPO₄ (avec x compris entre 0 et 1), FePO₄, K₃V₂(PO₄)₃, K₃V₂(PO₄)₂F₃, V₂O₅, K_{1,5}VOPO₄F_{0,5}, K₂Fe₂(SO₄)₃, KNi_{0,5}Mn_{0,5}O₂, K_{2/3}Ni_{1/3}Mn_{2/3}O₂, K_{0,45}Ni_{0,22}Ci_{0,11}Mn_{0,66}O₂, K_{0,44}MnO₂, K₄Fe₃(PO₄)₂P₂0₇, KₓMFe(CN)₆ (avec M comprenant au moins un des éléments choisi parmi: Fe, Cu, Ni ; et x compris entre 0 et 1).

La grande stabilité structurelle de l'élément LiNiₓMn_{y}Co_{1-2y}O₂ en fait un élément particulièrement intéressant pour sa mise en œuvre dans une électrode positive.

L'utilisation du LFP est également particulièrement avantageuse pour la fabrication d'une électrode positive. En effet, bien qu'étant un isolant électrique, sa mise en forme de particules de taille nanométrique et enrobées de carbone permet d'améliorer la cinétique d'insertion et de désinsertion des ions lithium. Par ailleurs, le LFP présente également une bonne stabilité chimique, conférée par sa structure polyanionique.

Avantageusement, le matériau actif d'électrode est un matériau actif d'électrode négative. Encore plus avantageusement, le matériau actif d'électrode négative comprend au moins un des matériaux choisi parmi :
Li₄Ti₅O₁₂, TiO₂, LiₓC₆ (avec x compris entre 0 et 1), carbone graphite, carbone noir, Na₃V₂(PO₄)₂F₃, Na_{0,85}Li_{0,52}Ni_{0,21}Mn_{0,64}0₂, Na₃V₂(PO₄)₄, Na₃(Mn_{0,5}Fe_{0,5})PO₄, Na₂FePO₄F, NaFePO₄, NaTi₂(PO₄)₃, Na₂Ti₃O₇, SiB₄, SiB₆, Mg₂Si, Ni₂Si, TiSi₂, MoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≤2), SiC, SiOC, LiSiO, SiOₓ (avec x compris entre 0 et 2), Fe₂O₃, SnO, un alliage LiM (M comprenant au moins un des éléments choisi parmi: Ag, Al, Ba, Bi, Cu, Ga, Ge, In, Ni, P, Pb, Sb, Si, Sn, Sr, Zn, Ti), un matériau comprenant un atome d'étain inclus dans un alliage comprenant au moins un des éléments choisi parmi : Si, Ni, Cu, Fe, Co, Mn, Zn, Ag, Ti, Ge, Bi, Sb, Cr, O, C.

Par exemple le matériau actif d'électrode négative peut comprendre au moins un des alliages choisi parmi: SnO_{w} (avec w compris en 0 et 2), SnSiO₃, LiSnO, Mg₂Sn.

L'introduction du matériau actif d'électrode dans l'extrudeuse 10 peut être faite au niveau des premiers 16 ou des seconds 17 moyens d'alimentation.

Le mélange peut en outre comprendre un sel de métal alcalin.

Par sel de métal alcalin, on entend un sel de lithium, ou un sel de sodium, ou un sel de potassium.

Un sel de lithium peut comprendre au moins un des éléments choisi parmi : lithium bis-trifluorométhanesulfonimide (LiTFSI), lithium bis(oxatlato)borate (LiBoB), LiPF₆, LiClO₄, LiBF₄, LiAsF₆, LiCF₃SO₃, LiN(CF₃SO₂)₃, LiN(C₂F₆SO₂).

Un sel de lithium comprenant du LiPF₆ est généralement très utilisé pour la fabrication de la solution électrolytique des batteries Lithium ion, cependant il peut avantageusement être remplacé par un sel de lithium comprenant du LiTFSI qui ne se dégrade pas dès lors qu'il est mis en contact avec de l'eau.

Par ailleurs, le LiTFSI présente une stabilité thermique et chimique qui lui permettent d'améliorer la sureté lors de sa mise en œuvre dans des batteries lithium ion, ainsi que les performances de ces dernières. Ainsi, le sel de métal alcalin peut avantageusement comprendre du LiTFSI.

Un sel de sodium peut comprendre au moins des éléments choisi parmi : sodium bis-trifluorométhanesulfonimide (NaTFSI), Sodium bis(oxatlato)borate (NaBoB), NaPF₆, NaClO₄, NaBF₄, NaAsF₆, NaCF₃SO₃, NaN(CF₃SO₂)₃, NaN(C₂F₆SO₂).

Un sel de potassium peut comprendre au moins des éléments choisi parmi : Potassium bis-trifluorométhanesulfonimide (KTFSI), Potassium bis(oxatlato)borate (KBoB), KPF₆, KClO₄, KBF₄, KAsF₆, KCF₃SO₃, KN(CF₃SO₂)₃, KN(C₂F₆SO₂), KSCN.

Le sel de métal alcalin peut être solubilisé, à chaud, dans le composé dinitrile indifféremment avant l'extrusion ou pendant l'extrusion.

Le sel de métal alcalin solubilisé dans le composé dinitrile forme l'électrolyte, également noté électrolyte SNx.

L'introduction dans l'extrudeuse du sel de métal alcalin et du composé dinitrile, solubilisé ou non, peut être faite au niveau des premiers 15 ou des seconds 16 moyens d'alimentation.

Le sel de métal alcalin peut présenter une concentration, dans le composé dinitrile, comprise entre 0,5 mol/L et 5 mol/L.

A titre d'exemple, le sel de métal alcalin peut être du LiPF₆, dilué dans du succinonitrile à 1M%.

De manière avantageuse et toujours à titre d'exemple, le sel de métal alcalin peut être du LiTFSI, et dilué dans du succinonitrile à 1 M%, plus particulièrement dans du succinonitrile comprenant également du LiBoB à 2 M%.

Le polymère support a pour fonction de former une matrice offrant une bonne tenue mécanique aux électrodes positive et négative de la batterie métal alcalin ion. Le polymère support a également la fonction d'hôte pour le matériau actif d'électrode.

Selon l'invention, le polymère support est thermo fusible (et éventuellement thermo ductile), et soluble dans le composé dinitrile.

Il est entendu tout au long de la description, que le polymère support, au sens de l'invention, présente une température de transition vitreuse Tg.

Le polymère support est introduit dans la zone de chauffe 12 de l'extrudeuse 10 par l'intermédiaire des premiers moyens d'alimentation 16.

Le polymère support peut alors être avantageusement chauffé à une température T supérieure à sa température de transition vitreuse Tg.

Le composé dinitrile est également introduit dans l'extrudeuse soit au niveau des premiers moyens d'alimentation 16, soit au niveau des seconds moyens d'alimentation 17

Le composé dinitrile, mis en œuvre dans l'invention, présente une température de fusion supérieure à 20°C.

Le composé dinitrile est du malononitrile ou du succinonitrile, respectivement, si n=1 ou n=2.

De manière particulièrement avantageuse, n=2, autrement dit le composé dinitrile est du succinonitrile. Le succinonitrile est un composé organique hyper-plastique, ininflammable et non volatile qui présente une température de fusion de 57°C. Par ailleurs, le succinonotrile peut être utilisé dans une batterie de métal alcalin ion sur une gamme de températures comprises entre -20°C et 250°C.

Le polymère support et le composé dinitrile sont alors mis en contact dans l'extrudeuse, soit au niveau de la zone de chauffe 12, soit au niveau de la zone de mélangeage 13.

Dès lors qu'ils sont mis en contact, soit dans la zone de chauffe 12, soit dans la zone de mélangeage 13, le polymère support et le composé dinitrile forment un gel comprenant également sous forme dispersée le matériau actif d'électrode.

Par gel, on entend un réseau tridimensionnel de solides dilué dans un fluide porteur. La cohésion du réseau tridimensionnel peut être assurée par des liaisons chimiques et/ou physiques, et/ou de petits cristaux, et/ou d'autres liaisons qui demeurent intacte dans le fluide porteur.

Dès lors qu'il se retrouve dans la zone de mélangeage, l'ensemble du mélange est homogénéisé, puis poussé dans la zone de pompage 14, puis dans la filière 15 pour se voir conférer la forme de membrane séparatrice voulue.

De manière avantageuse, le rapport massique entre le composé dinitrile et le polymère support est compris entre 40/60 et 90/10, préférentiellement entre 65/35 et 75/25, encore plus préférentiellement de l'ordre de 70/30.

Dans l'électrode positive, la somme des masses du polymère support et du composé dinitrile peut représenter 20 % à 60 %, avantageusement 30 % à 40 %, de la masse de l'électrode positive.

Dans l'électrode négative, la somme des masses du polymère support et du composé dinitrile peut représenter 20 % à 60 %, avantageusement 30 % à 40 %, de la masse de l'électrode négative.

Le polymère support peut comprendre au moins un des éléments choisi parmi : copolyfluorure de vinylidène hexafluoropropylène 21216 (PVDF-HFP 21216), copolyfluorure de vinylidène hexafluoropropylène 21510 (PVDF-HFP 21510), poly(méthyl méthacrylate) (PMMA), poly(butyl méthacrylate) (PBMA), oxyde de polyéthylène (POE), polyvinylpyrrolidone (PVP).

Les éléments précités présentent une stabilité chimique, thermique, et électrochimique requises pour être mis en œuvre dans une électrode (positive ou négative) d'une batterie métal alcalin ion.

Les inventeurs ont par ailleurs démontré qu'un polymère support comprenant l'un ou l'autre des polymères POE ou PVP gélifiait de manière quasi instantanée. Par ailleurs, à l'issue du processus de gélification, ces deux composés sont flexibles et présentent un léger gonflement.

Le POE, connu pour sa capacité à former des complexes avec une large variété de sels de lithium (dès lors qu'un sel de métal alcalin est considéré pour la fabrication de l'électrode), présente une conductivité ionique relativement faible (10⁻⁸ à 10⁻⁵ S/cm) à température ambiante lorsqu'il est utilisé sous forme solide. Cependant, dès lors qu'il est mis en combinaison avec un composé dinitrile, notamment du succinonitrile, le POE gélifié voit sa conductivité ionique augmenter. Par exemple, le mélange gélifié comprenant du POE, du succinonitrile, et du LiTFSI, dans les proportions 70 : 25 : 5, présente une conductivité ionique de l'ordre de l'ordre de 10⁻³ S/cm.

Ainsi, l'emploi du composé dinitrile, et notamment du succinonitrile, en tant que plastifiant, permet d'améliorer la conductivité ionique de polymères supports qui n'auraient pu être envisagés pour leur mise en œuvre par voie solide.

Aussi, dès lors que le composé dinitrile est du succinonitrile, un chauffage du polymère support à une température comprise entre Tg et Tg + 50 °C, avantageusement entre Tg et Tg + 25 °C, permet d'obtenir l'électrode sous forme gélifiée. Le succinonitrile permet de considérer des températures lors de l'extrusion proches de la température de transition vitreuse du polymère support.

Un polymère support comprenant l'un ou l'autre des polymères PVDF-HFP 21216 et PVDF-HFP 21510, à l'issue de sa gélification avec le composé dinitrile, présente des régions cristallines participant à la bonne tenue mécanique de l'électrode, et des régions amorphes capables de piéger une grande quantité du mélange de sel de métal alcalin solubilisé dans le composé dinitrile. L'utilisation de tels polymères permet d'obtenir des électrodes présentant une bonne tenue mécanique et des performances électrochimiques compatibles avec leur utilisation dans une batterie métal alcalin ion.

En ce qui concerne le PMMA, les inventeurs ont pu démontrer que ce dernier peut gélifier jusqu'à une teneur massique de 70% de composé dinitrile (plus particulièrement du succinonitrile). Par ailleurs, l'électrode ainsi obtenue présente une bonne tenue mécanique pour une épaisseur de 60 µm.

La conductivité électronique du matériau actif d'électrode, dès qu'il est présent sous forme dispersée (formant des agrégats de matériau actif) dans l'électrode, peut ne pas permettre un transport électronique optimal. Ainsi, et de manière avantageuse, le mélange peut comprendre un matériau conducteur électronique destiné à former un réseau de percolation au sein de l'électrode. Plus particulièrement, le matériau conducteur électronique est dispersé dans le mélange (suite à son introduction dans l'extrudeuse au niveau des premiers moyens d'alimentation 16 ou des secondes d'alimentation 17), et forme un réseau de percolation permettant d'améliorer le transport électronique au sein de l'électrode.

De manière particulièrement, le réseau de percolation ainsi formé dans l'électrode peut comprendre une composante courte distance, et une composante longue distance.

La composante courte distance est un réseau de percolation, courte distance, et permet le transport électronique intra agrégat de matériau actif.

La composant longue distance est un réseau de percolation longue distance, et permet le transport électronique inter agrégats de matériau conducteur.

Le réseau de percolation courte distance peut comprendre du noir de carbone (le noir de carbone comprend des nanoparticules sphérique de carbone).

Le réseau de percolation longue distance comprendre au moins un des éléments choisi parmi : nanotube de carbone multi-parois, fibre de carbone.

L'électrode extrudée sous forme gélifiée peut être calandrée à chaud sur un collecteur de courant.

Le collecteur de courant peut comprendre au moins un des éléments choisi parmi : un feutre de carbone, un feuillard métallique en cuivre ou en aluminium.

A titre d'exemple une électrode positive a été formée à partir du mélange présenté au tableau 1.

**Tableau 1**

| | **Constituants** | **Proportion (en %)** |
|---|---|---|
| **Polymère support** | PMMA | 15% |
| **Composé dinitrile et sel de Lithium** | Succinonitrile et sel de lithium | 35% |
| **Matériau actif d'électrode positive** | NMC | 38% |
| **Composante courte distance** | Noir de carbone | 6,3% |
| **Composant longue distance** | Nanotubes de carbone multi-paroi | 6,3 |

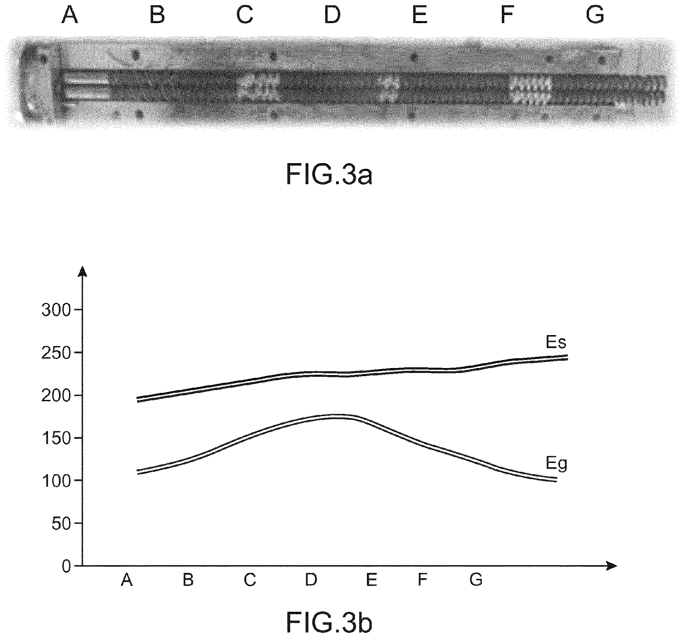

Le mélange donné au tableau est alors introduit dans une extrudeuse représentée à la figure 3a, et comprenant 7 zones notées A, B, C, D, E, F, et G.

Le profil de température de l'extrudeuse pendant l'étape d'extrusion est donné à la figure 3b pour l'extrusion, respectivement, de l'électrode sous forme gélifiée (Eg), et du polymère support (Es).

En sortie d'extrudeuse, un film gélifié autoporté et de 100 µm d'épaisseur est obtenu, et est reporté à chaud (à 80 °C) sur un collecteur de courant comprenant un feutre de carbone.

Afin de tester les performances de l'électrode positive ainsi obtenue, cette dernière est assemblée dans une batterie comprenant une membrane électrolytique et une électrode négative en lithium métal.

La membrane électrolytique est sous forme gélifiée et comprend :
- 70% de PVDF- HFP comme polymère support
- 25% de succinonitrile,
- 5 % de LiTFSI

La membrane électrolytique également être formée par extrusion, ou selon un procédé dit par voie solvant à température ambiante.

Autrement un solvant peut être employé pour solubiliser le polymère support, et est ensuite évaporé.

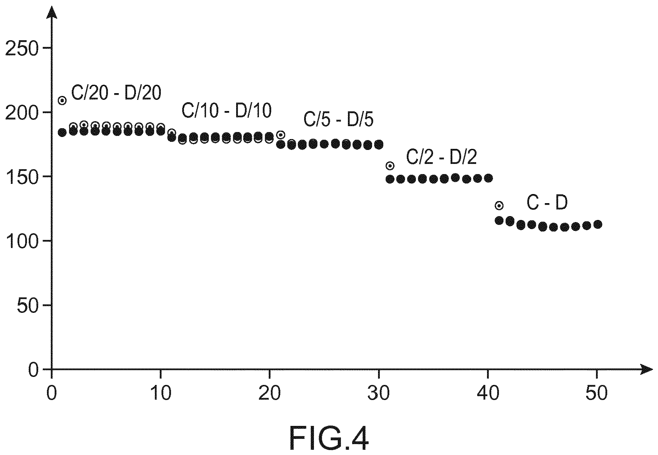

La batterie ainsi formée peut être testée selon une procédure galvano statique (représentée à la figure 4) commençant par des cycles de charge, dans l'ordre, à C/20, C/10, C/5, C/2 et C.

La même procédure est exécutée également avec des cycles de décharge à D/20, D/10, D/5, D/2 et D.

La capacité restituée par l'électrode ainsi fabriquée selon la présente invention est de l'ordre de 180 mAh/g de NMC.

Toujours à titre d'exemple une électrode positive a été formée à partir du mélange présenté au tableau 1.

| | **Constituants** | **Proportion (en %)** |
|---|---|---|
| **Polymère support** | PMMA | 15% |
| **Composé dinitrile et sel de Lithium** | Succinonitrile et sel de lithium | 35% |
| **Matériau actif d'électrode négative** | LiFePO4 | 38 % |
| **Composante courte distance** | Noir de carbone | 6,3 % |
| **Composant longue distance** | Nanotubes de carbone multi-paroi | 6,3 |

Le procédé de fabrication de cette électrode positive reprend pour l'essentiel les mêmes étapes de fabrication de l'électrode positive donnée dans l'exemple précédent.

L'électrode positive gélifiée fabriquée selon la présente invention permet de restituer une capacité de l'ordre de 140 mAh/g.

L'invention n'est pas limitée à un seul polymère support, et un mélange d'une pluralité de polymères supports peut être envisagé.

Nous notons également que la membrane séparatrice peut également être fabriquée par un procédé d'extrusion, et être colaminée avec les électrodes positive et négative.

Plus particulièrement, la membrane séparatrice peut être sous forme gélifiée.

Ainsi, la formation de la membrane séparatrice peut comprendre l'extrusion d'un mélange comprenant :
- un polymère support,
- un électrolyte comprenant un sel de métal alcalin solubilisé dans un composé dinitrile de formule N≡C - R - C ≡ N, où R est un groupement hydrocarboné CₙH₂ₙ, et n'étant égal à 1 ou 2,
- un sel de métal alcalin.

Le choix du polymère support et du sel alcalin peut être le même que celui effectué pour le procédé de fabrication de la membrane séparatrice précédemment décrit.

Le composé dinitrile peut avantageusement être du succinonitrile.

L'extrusion peut être également exécutée dans des conditions similaires aux conditions d'extrusion de la membrane séparatrice selon l'invention.

Plus particulièrement, le procédé de fabrication de la membrane séparatrice diffère du procédé de fabrication de l'électrode sous forme gélifiée en ce que le mélange ne comprend ni un matériau actif d'électrode ni matériau conducteur électronique.

Ainsi, la colamination de l'électrode positive, de la membrane séparatrice et de l'électrode négative peut être exécutée directement à la sortie de trois extrudeuses.

Le procédé selon l'invention ne nécessite pas d'étape d'ajout de solution électrolytique. En effet, l'électrolyte est au moins intégré dans la membrane séparatrice (mélange SNx).

Par ailleurs, la présence du mélange SNx également dans les électrodes négative et positive permet un meilleur transport des ions métal alcalin d'une électrode vers la membrane séparatrice et inversement.

## Revendications

1. Procédé de fabrication d'une électrode, sous forme gélifiée, d'une batterie métal alcalin-ion, le procédé comprend une étape d'extrusion d'un mélange comprenant :
- un matériau actif d'électrode
- un composé dinitrile de formule N≡C - R - C ≡ N, où R est un groupement hydrocarboné CₙH₂ₙ, et n étant égal à 1 ou 2, de préférence n est égal à 2,
- un polymère support, présentant une température de transition vitreuse Tg, thermo fusible, soluble dans le composé dinitrile.

2. Procédé selon la revendication 1, dans lequel l'étape d'extrusion est exécutée au moyen d'une extrudeuse comprenant au moins une zone de chauffe, au moins une zone de mélangeage, et une zone de pompage terminée par une filière.

3. Procédé selon la revendication 2, dans lequel le polymère support est introduit dans l'extrudeuse au niveau de la zone chauffe, où il est chauffé à une température T supérieure à la température de transition vitreuse Tg, avantageusement à une température T comprise entre Tg et Tg + 50°C.

4. Procédé selon l'une des revendications 1 à 3, dans lequel le matériau actif d'électrode est un matériau actif d'électrode positive, avantageusement, le matériau actif d'électrode positive comprend au moins un des éléments choisi parmi :
LiFePO₄, Li₂FeSiO₄, LiFeSO₄, LiMn₂O₄, LiNiₓMn_{y}Co_{1-2y}O₂ (avec x compris entre 0 et 1, et y compris entre 0 et 0,5), LiNiO₂, LiMnO₃, LiMnO₂, LiMn₂O₃, Li₄Mn₅O₁₂, LiMn₂₋ₓMₓO₂ (avec M comprenant au moins un des éléments choisi parmi : Co, Ni, Fe, Cr, Zn, Ti, et x étant compris entre 0,01 et 0,2), Li₂Mn₃MO₈ (avec M comprenant au moins un des éléments choisi parmi: Fe, Co, Ni, Cu, Zn), Li₁₋ₓAₓMn₂O₄ (avec A comprenant au moins un des éléments choisi parmi: Mg, B, Al, Fe, Co, Ni, Cr, Zn, Ca ; et x étant compris entre 0,01 et 0,1), LiNi₁₋ₓMₓO₂ (avec M comprenant au moins un des éléments choisi parmi: Co, Fe, Ga; et x étant compris entre 0,01 et 0,2), LiFeO₂, Fe₂(SO₄)₃, LiCo₁₋ₓMₓO₂ (avec M comprenant au moins un des éléments choisi parmi: Ni, Fe, Mn ; et x étant compris entre 0,01 et 0,2), LiNi₁₋ₓM_{X}O₂ (avec M comprenant au moins un des éléments choisi parmi: Mn, Fe, Co, Al, Ga, Ca, Mg ; et x étant compris entre 0,01 et 0,2), Fe(MoO₄)₃, FeF₃, LiMPO₄, LiMVO₄, Li₂MSiO₄ (avec M comprenant au moins un des éléments choisi parmi: Co, Ni, Mn, Fe), KMn₂O₂, KₓMO₂ (avec M comprenant au moins un des éléments choisi parmi : Co, Ni, Fe, Cr, et avec x compris entre 0 et 1), KₓFeMnO₂ (avec x compris entre 0 et 1), KₓMnO₂ (avec x compris entre 0 et 1), KₓCr_{0,6}Ti_{0,4}O₂, KₓTi_{0,5}Co_{0,5}O₂ (avec x compris entre 0 et 1), KₓCo_{1/3}Ni_{1/3}Mn_{1/3}O₂ (avec x compris entre 0 et 1), Kₓ(Ni_{0,8}Co_{0,15}Al_{0,05})O₂ (avec x compris entre 0 et 1), KₓFePO₄ (avec x compris entre 0 et 1), K₂FePO₄F, KₓV₂O₅ (avec x compris entre 0 et 2), KₓVPO₄F (avec x compris entre 0 et 1), KₓMnPO₄ (avec x compris entre 0 et 1), FePO₄, K₃V₂(PO₄)₃, K₃V₂(PO₄)₂F₃, V₂O₅, K_{1,5}VOPO₄F_{0,5}, K₂Fe₂(SO₄)₃, KNi_{0,5}Mn_{0,5}O₂, K_{2/3}Ni_{1/3}Mn_{2/3}O₂, K_{0,45}Ni_{0,22}Co_{0,11}Mn_{0,66}O₂, K_{0,44}MnO₂, K₄Fe₃(PO₄)₂P₂0₇, KₓMFe(CN)₆ (avec M comprenant au moins un des éléments choisi parmi: Fe, Cu, Ni ; et x compris entre 0 et 1).

5. Procédé selon l'une des revendications 1 à 3, dans lequel le matériau actif d'électrode est un matériau actif d'électrode négative, avantageusement, le matériau actif d'électrode négative comprend au moins un des matériaux choisi parmi :
Li₄Ti₅O₁₂, TiO₂, LiₓC₆ (avec x compris entre 0 et 1), carbone graphite, carbone noir, Na₃V₂(PO₄)₂F₃, Na_{0,85}Li_{0,52}Ni_{0,21}Mn_{0,64}0₂, Na₃V₂(PO₄)₄, Na₃(Mn_{0,5}Fe_{0,5})PO₄, Na₂FePO₄F, NaFePO₄, NaTi₂(PO₄)₃, Na₂Ti₃O₇, SiB₄, SiB₆, Mg₂Si, Ni₂Si, TiSi₂, MoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≤2), SiC, SiOC, LiSiO, SiOₓ (avec x compris entre 0 et 2), Fe₂O₃, SnO, un alliage LiM (M comprenant au moins un des éléments choisi parmi: Ag, Al, Ba, Bi, Cu, Ga, Ge, In, Ni, P, Pb, Sb, Si, Sn, Sr, Zn, Ti), un matériau comprenant un atome d'étain inclus dans un alliage comprenant au moins un des éléments choisi parmi : Si,Ni, Cu,Fe, Co,Mn, Zn,Ag, Ti, Ge, Bi, Sb, Cr, O, C.

6. Procédé selon l'une des revendications 1 à 5, dans lequel le polymère support comprend au moins un des éléments choisi parmi : copolyfluorure de vinylidène hexafluoropropylène, poly(méthyl méthacrylate), poly(butyl méthacrylate), oxyde de polyéthylène, polyvinylpyrrolidone.

7. Procédé selon l'une des revendications 1 à 6, dans lequel le rapport massique entre le composé dinitrile et le polymère support est compris entre 40/60 et 90/10.

8. Procédé selon l'une des revendications 1 à 7, dans lequel le mélange destiné à être extrudé comprend en outre un sel de métal alcalin solubilisé à chaud dans le composé dinitrile pour former un électrolyte.

9. Procédé selon la revendication 8 en combinaison avec la revendication 2, dans lequel le sel de métal alcalin et le composé dinitrile sont introduits dans l'extrudeuse soit au niveau de la zone de chauffe, soit au niveau de la zone de mélangeage.

10. Procédé selon la revendication 8 ou 9, dans lequel le sel de métal alcalin est un sel lithium, avantageusement, le sel de métal lithium comprend au moins un des éléments choisi parmi : lithium bis-trifluorométhanesulfonimide, lithium bis(oxatlato)borate, LiPF₆, LiClO₄, LiBF₄, LiAsF₆, LiCF₃SO₃, LiN(CF₃SO₂)₃, LiN(C₂F₆SO₂).

11. Procédé selon l'une des revendications 8 à 10, dans lequel le sel de métal alcalin présente une concentration comprise entre 0,5 mol/L et 5 mol/L dans le composé dinitrile.

12. Procédé selon l'une des revendications 1 à 11, dans lequel le mélange comprend en outre un matériau conducteur électronique, avantageusement, le matériau conducteur électronique comprend au moins un des éléments choisi parmi : noir de carbone, fibres de carbone.

13. Procédé selon l'une des revendications 1 à 12, dans lequel l'électrode gélifiée est disposée sur un collecteur de courant après l'étape d'extrusion.

## Patentansprüche

1. Verfahren zur Herstellung einer gelierten Elektrode einer Alkalimetall-Ionenbatterie, wobei das Verfahren einen Schritt des Extrudierens einer Mischung umfasst, die umfasst:
- ein aktives Elektrodenmaterial
- eine Dinitrilverbindung der Formel N≡C - R - C ≡ N, wobei Reine CₙH₂ₙ-Kohlenwasserstoffgruppe ist und n gleich 1 oder 2, vorzugsweise n gleich 2 ist,
- ein Trägerpolymer mit einer Glasübergangstemperatur Tg, heißschmelzend und in der Dinitrilverbindung löslich.

2. Verfahren nach Anspruch 1, wobei der Extrusionsschritt mittels eines Extruders durchgeführt wird, der wenigstens eine Heizzone, wenigstens eine Mischzone und eine Pumpzone umfasst, die durch eine Düse abgeschlossen ist.

3. Verfahren nach Anspruch 2, wobei das Trägerpolymer in den Extruder im Bereich der Heizzone eingebracht wird, wo es auf eine Temperatur T erwärmt wird, die höher ist als die Glasübergangstemperatur Tg; vorteilhafterweise auf eine Temperatur T zwischen Tg und Tg + 50 °C.

4. Verfahren nach einem der Ansprüche 1 bis 3, wobei das aktive Elektrodenmaterial ein aktives Material der positiven Elektrode ist, wobei vorteilhafterweise das aktive Material der positiven Elektrode wenigstens eines der Elemente umfasst, die gewählt sind aus:
LiFePO₄, Li₂FeSiO₄, LiFeSO₄, LiMn₂O₄, LiNiₓMn_{y}CO_{1-2y}O₂ (mit x = 0-1 und y = 0-0,5), LiNiO₂, LiMnO₃, LiMnO₂, LiMn₂O₃, Li₄Mn₅O₁₂, LiMn₂₋ₓMₓO₂ (wobei M wenigstens eines der Elemente umfasst, die gewählt sind aus: Co, Ni, Fe, Cr, Zn, Ti mit x=0,01-0,2), Li₂Mn₃MO₈ (wobei M wenigstens eines der Elemente umfasst, die gewählt sind aus: Fe, Co, Ni, Cu, Zn), Li₁₋ₓAₓMn₂O₄ (wobei A wenigstens eines der Elemente umfasst, die gewählt sind aus: Mg; B, AI, Fe, Co, Ni, Cr, Zn, Ca; mit x=0,01-0,1), LiNi₁₋ₓMₓO₂ (wobei M wenigstens eines der Elemente umfasst, die gewählt sind aus: Co, Fe, Ga; mit x=0,01-0,2), LiFeO₂, Fe₂(SO₄)₃, LiCO₁₋ₓMₓO₂ (wobei M wenigstens eines der Elemente umfasst, die gewählt sind aus: Ni, Fe, Mn; mit x=0,01-0,2), LiNi₁₋ₓMₓO₂ (wobei M wenigstens eines der Elemente umfasst, die gewählt sind aus: Mn, Fe, Co, Al, Ga, Ca, Mg; mit x= 0,01-0,2), Fe(MoO₄)₃, FeF₃, LiMPO₄, LiMVO₄, Li₂MSiO₄ (wobei M wenigstens eines der Elemente umfasst, die gewählt sind aus: Co, Ni, Mn, Fe), KMₙ₂O₂, KₓMO₂ (wobei M wenigstens eines der Elemente umfasst, die gewählt sind aus: CO, Ni, Fe, Cr und mit x=0-1), KₓFeMnO₂ (mit x=0-1), KₓMnO₂ (mit x=0-1), KₓCr_{0,6}Ti_{0,4}O₂, KₓTi_{0,5}Co_{0,5}O₂ (mit x=0-1), KₓCo_{1/3}Ni_{1/3}Mn_{1/3}O₂ (mit x=0-1), Kₓ(Ni_{0,8}Co_{0,15}Al_{0,05})O₂ (mit x=0-1), KₓFePO₄ (mit x=0-1), K₂FePO₄F, KₓV₂O₅ (mit x=0-2), KₓVPO₄F (mit x=0-1), KₓMnPO₄ (mit x=0-1), FePO₄, K₃V₂(PO₄)₃, K₃V₂(PO₄)₂F₃, V₂O₅, K_{1,5}VOPO₄F_{0,5}, K₂Fe₂(SO₄)₃, KNi_{0,5}Mn_{0,5}O₂, K_{2/3}Ni_{1/3}Mn_{2/3}O₂, K_{0,45}Ni_{0,22}Co_{0,11}Mn_{0,66}O₂, K_{0,44}MnO₂, K₄Fe₃(PO₄)₂P₂O₇, KₓMFe(CN)₆ (wobei M wenigstens eines der Elemente umfasst, die gewählt sind aus: Fe, Cu, Ni; und x=0-1).

5. Verfahren nach einem der Ansprüche 1 bis 3, wobei das aktive Elektrodenmaterial ein aktives Material der negativen Elektrode ist, wobei vorteilhafterweise das aktive Material der negativen Elektrode wenigstens einen der Stoffe umfasst, die gewählt sind aus:
Li₄Ti₅O₁₂, TiO₂, LiₓC₆ (mit x=0-1), Kohlenstoffgraphit, schwarzer Kohlenstoff, Na₃V₂(PO₄)₂F₃, Na_{0,85}Li_{0,52}Ni_{0,21}Mn_{0,64}O₂, Na₃V₂(PO₄)₄, Na₃(Mn_{0,5}Fe_{0,5})PO₄, Na₂FePO₄F, NaFePO₄, NaTi₂(PO₄)₃, Na₂Ti₃O₇, SiB₄, SiB₆, Mg₂Si, Ni₂Si, TiSi₂, MoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≤2), SiC, SiOC, LiSiO, SiOₓ (mit x=0-2), Fe₂O₃, SnO, eine LiM-Legierung (wobei M wenigstens eines der Elemente umfasst, die gewählt sind aus: Ag, Al, Ba, Bi, Cu, Ga, Ge, In, Ni, P, Pb, Sb, Si, Sn, Sr, Zn, Ti), ein Material, das ein Zinnatom umfasst, das in einer Legierung enthalten ist, die wenigstens eines der Elemente umfasst, die gewählt sind aus: Si,Ni, Cu,Fe, Co,Mn, Zn,Ag, Ti, Ge, Bi, Sb, Cr, O, C.

6. Verfahren nach einem der Ansprüche 1 bis 5, wobei das Trägerpolymer wenigstens eines der Elemente umfasst, die gewählt sind aus: Vinylidenhexafluorpropylen-Copolyfluorid, Poly(methylmethacrylat), Poly(butylmethacrylat), Polyethylenoxid, Polyvinylpyrrolidon.

7. Verfahren nach einem der Ansprüche 1 bis 6, wobei das Massenverhältnis zwischen der Dinitrilverbindung und dem Trägerpolymer zwischen 40/60 und 90/10 liegt.

8. Verfahren nach einem der Ansprüche 1 bis 7, wobei die zu extrudierende Mischung ferner ein Alkalimetallsalz umfasst, das in der Dinitrilverbindung heiß löslich gemacht wird, um einen Elektrolyten zu bilden.

9. Verfahren nach Anspruch 8 in Kombination mit Anspruch 2, wobei das Alkalimetallsalz und die Dinitrilverbindung in den Extruder entweder in der Heizzone oder in der Mischzone eingebracht werden.

10. Verfahren nach Anspruch 8 oder 9, wobei das Alkalimetallsalz ein Lithiumsalz ist, wobei das Lithiummetallsalz vorteilhafterweise wenigstens eines der Elemente umfasst, die gewählt sind aus: Lithium-bis-trifluormethansulfonimid, Lithium-bis(oxatlato)borat, LiPF₆, LiCiO₄, LiBF₄, LiAsF₆, LiCF₃SO₃, LiN(CF₃SO₂)₃, LiN(C₂F₅SO₂).

11. Verfahren nach einem der Ansprüche 8 bis 10, wobei das Alkalimetallsalz eine Konzentration zwischen 0,5 mol/L und 5 mol/L in der Dinitrilverbindung aufweist.

12. Verfahren nach einem der Ansprüche 1 bis 11, wobei die Mischung ferner ein elektronisch leitfähiges Material umfasst, wobei das elektronisch leitfähige Material vorteilhafterweise wenigstens eines der Elemente umfasst, die gewählt sind aus: Rußschwarz, Kohlenstoffasern.

13. Verfahren nach einem der Ansprüche 1 bis 12, wobei die Gelelektrode nach dem Extrusionsschritt auf einem Stromabnehmer angeordnet ist.

## Claims

1. Method of manufacturing an electrode in gel form, for an alkali metal ion battery, the method comprises a step of extruding a mix comprising:
- an active electrode material
- a dinitrile compound with formula N≡C - R - C ≡ N, in which R is a hydrocarbon group CₙH₂ₙ, and n is equal to 1 or 2 and preferably equal to 2,
- a hot melt support polymer with a glass transition temperature Tg, soluble in the dinitrile compound.

2. Method according to claim 1, in which the extrusion step is carried out by means of an extruder comprising at least one heating zone, at least one mixing zone and a pumping zone terminated by a die.

3. Method according to claim 2, in which the support polymer is added into the extruder at the heating zone, where it is heated to a temperature T higher than the glass transition temperature Tg, advantageously to a temperature T between Tg and Tg + 50°C.

4. Method according to one of the claims 1 to 3, in which the active electrode material is an active positive electrode material, and advantageously the active positive electrode material comprises at least one element chosen among:
LiFePO₄, Li₂FeSiO₄, LiFeSO₄, LiMn₂O₄, LiNiₓMn_{y}Co_{1-2y}O₂ (where x is between 0 and 1, and y is between 0 and 0.5), LiNiO₂, LiMnO₃, LiMnO₂, LiMn₂O₃, Li₄Mn₅O₁₂, LiMn₂₋ₓMₓO₂ (in which M includes at least one element chosen from among: Co, Ni, Fe, Cr, Zn, Ti, and x is between 0.01 and 0.2), Li₂Mn₃MO₈ (in which M includes at least one element chosen from among: Fe, Co, Ni, Cu, Zn), Li₁₋ₓAₓMn₂O₄ (in which A includes at least one element chosen from among: Mg, B, Al, Fe, Co, Ni, Cr, Zn, Ca and x is between 0.01 and 0.1), LiNi₁₋ₓMₓO₂ (in which M includes at least one element chosen from among: Co, Fe, Ga: and x is between 0.01 and 0.2), LiFeO₂, Fe₂(SO₄)₃, LiCo₁₋ₓMₓO₂ (in which M includes at least one element chosen from among: Ni, Fe, Mn; and x is between 0.01 and 0.2), LiNi₁₋ₓM_{X}O₂ (in which M includes at least one element chosen from among: Mn, Fe, Co, Al, Ga, Ca, Mg; and x is between 0.01 and 0.2), Fe(Mo0₄)₃, FeF₃, LiMPO₄, LiMVO₄, Li₂MSiO₄ (in which M includes at least one element chosen from among: Co, Ni, Mn, Fe), KMn₂O₂, KₓMO₂ (in which M includes at least one element chosen from among: Co, Ni, Fe, Cr, and x is between 0 and 1), KₓFeMnO₂ where x is between 0 and 1), KₓMnO₂ (where x is between 0 and 1), KₓCr_{0.6}Ti_{0.4}O₂, KₓTi_{0.5}Co_{0.5}O₂ (where x is between 0 and 1), KₓCo_{1/3}Ni_{1/3}Mn_{1/3}O₂ (where x is between 0 and 1), Kₓ(Ni_{0.8}Co_{0.15}Al_{0.05})O₂ (where x is between 0 and 1), KₓFePO₄ (where x is between 0 and 1), K₂FePO₄F, KₓV₂O₅ (where x is between 0 and 2), KₓVPO₄F (where x is between 0 and 1), K_{X}MnPO₄ (where x is between 0 and 1), FePO₄, K₃V₂(PO₄)₃, K₃V₂(PO₄)₂F₃, V₂O₅, K_{1.5}VOPO₄F_{0.5}, K₂Fe₂(SO₄)₃, KNi_{0.5}Mn_{0.5}O₂, K_{2/3}Ni_{1/3}Mn_{2/3}O₂, K_{0.45}Ni_{0.22}Co_{0.11}Mn_{0.66}O₂, K_{0.44}MnO₂, K₄Fe₃(PO₄)₂P₂O₇, KₓMFe(CN)₆ (in which M includes at least one element chosen from among: Fe, Cu, Ni ; and x is between 0 and 1).

5. Method according to one of the claims 1 to 3, in which the active electrode material is an active negative electrode material, and advantageously the active negative electrode material comprises at least one material chosen among: Li₄Ti₅O₁₂, TiO₂, LiₓC₆ (where x is between 0 and 1), carbon graphite, carbon black, Na₃V₂(PO₄)₂F₃, Na_{0.85}Li_{0.52}Ni_{0.21}Mn_{0.64}0₂, Na₃V₂(PO₄)₄, Na₃(Mn_{0.5}Fe_{0.5})PO₄, Na₂FePO₄F, NaFePO₄, NaTi₂(PO₄)₃, Na₂Ti₃O₇, SiB₄, SiB₆, Mg₂Si, Ni₂Si, TiSi₂, MoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≤2), SiC, SiOC, LiSiO, SiOₓ (where x is between 0 and 2), Fe₂O₃, SnO, an LiM alloy (in which M includes at least one element chosen from among: Ag, Al, Ba, Bi, Cu, Ga, Ge, In, Ni, P, Pb, Sb, Si, Sn, Sr, Zn, Ti), a material containing an atom of tin contained in an alloy comprising at least one element chosen from among: Si, Ni, Cu, Fe, Co, Mn, Zn, Ag, Ti, Ge, Bi, Sb, Cr, O, C.

6. Method according one of the claims 1 to 5, in which the support polymer comprises at least one element chosen from among polyvinylidene hexafluoropropylene copolyfluoride, poly(methyl methacrylate), poly(butyl methacrylate), polyethylene oxide, polyvinylpyrrolidone.

7. Method according to one of the claims 1 to 6, in which the mass ratio between the dinitrile compound and the support polymer is between 40/60 and 90/10.

8. Method according to one of the claims 1 to 7, in which the mix to be extruded further comprises an alkali metal salt heat-solubilised in the dinitrile compound to form an electrolyte.

9. Method according to claim 8 in combination with claim 2, in which the alkali metal salt and the dinitrile compound are added into the extruder either in the heating zone or the mixing zone.

10. Method according to claim 8 or 9, in which the alkali metal salt is a lithium salt, the lithium metal salt advantageously comprises at least one element chosen from among lithium bis-trifluoromethanesulfonimide, lithium bis(oxatlato)borate, LiPF₆, LiClO₄, LiBF₄, LiAsF₆, LiCF₃SO₃, LiN(CF₃SO₂)₃, LiN(C₂F₅SO₂).

11. Method according to one of the claims 8 to 10, in which the concentration of the alkali metal salt in the dinitrile compound is between 0.5 mol/L and 5 mol/L.

12. Method according to one of the claims 1 to 11, in which the mix also comprises an electronic conducting material, advantageously the electronic conducting material comprises at least one element chosen from among: carbon black, carbon fibres.

13. Method according to one of the claims 1 to 12, in which the gelled electrode is placed on a current collector after the extrusion step.
